(19) Europäisches Patentamt / European Patent Office / Office européen des brevets

(11) **EP 2 877 979 B1**

(12) **FASCICULE DE BREVET EUROPEEN**

(45) Date de publication et mention de la délivrance du brevet:
**18.09.2019 Bulletin 2019/38**

(21) Numéro de dépôt: **13756604.8**

(22) Date de dépôt: **26.07.2013**

(51) Int Cl.:
**G06T 7/00** *(2017.01)*

(86) Numéro de dépôt international:
**PCT/FR2013/051807**

(87) Numéro de publication internationale:
**WO 2014/016531 (30.01.2014 Gazette 2014/05)**

(54) **METHODE MONOCAMERA DE DETERMINATION D'UNE DIRECTION D'UN SOLIDE**

MONOKAMERAVERFAHREN ZUR RICHTUNGSBESTIMMUNG EINES FESTKÖRPERS

MONOCAMERA METHOD OF DETERMINING A DIRECTION OF A SOLID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2012 FR 1257276**

(43) Date de publication de la demande:
**03.06.2015 Bulletin 2015/23**

(73) Titulaire: **Institut Français des Sciences et Technologies des Transports, de l'Amenagement et des Reseaux 77420 Champs sur Marne (FR)**

(72) Inventeurs:
- **GLASER, Sébastien**
  **F-78000 Versailles (FR)**
- **AUBERT, Didier**
  **F-91540 Mennecy (FR)**
- **LUSETTI, Benoît**
  **F-78000 Versailles (FR)**
- **CHEVREAU, Jean-Marie**
  **F-37100 Tours (FR)**

(74) Mandataire: **Duflos, Bertrand Guillaume et al Cabinet Beau de Loménie 158, rue de l'Université 75340 Paris Cedex 07 (FR)**

(56) Documents cités:
**US-B2- 7 881 560**

- **SHUNLIANG PAN ET AL: "A faster relative 3D position and attitude algorithm based on special four-point feature", PROCEEDINGS OF SPIE, vol. 6357, 13 novembre 2006 (2006-11-13), pages 63571A-63571A-7, XP055057728, ISSN: 0277-786X, DOI: 10.1117/12.716958**
- **YIHONG WU ET AL: "PnP Problem Revisited", JOURNAL OF MATHEMATICAL IMAGING AND VISION, KLUWER ACADEMIC PUBLISHERS, BO, vol. 24, no. 1, 1 janvier 2006 (2006-01-01), pages 131-141, XP019209128, ISSN: 1573-7683, DOI: 10.1007/S10851-005-3617-Z**
- **Rodrigo L Carceroni ET AL: "Numerical Methods for Model-Based Pose Recovery", Technical Report 659, 1 août 1997 (1997-08-01), pages 1-90, XP055036912, Extrait de l'Internet: URL:http://citeseerx.ist.psu.edu/viewdoc/download;jsessionid=DF711D44421D2347BD23948 6CDCAE5F8?doi=10.1.1.52.5307&rep=rep1&type =pdf [extrait le 2012-08-31]**
- **Youngil Kim ET AL: "An Optical Helmet-Tracking System Using EKF-based PF", AIAA Guidance, Navigation and Control Conference and Exhibit, 18 août 2008 (2008-08-18), XP055057723, Honolulu, Hawaii Extrait de l'Internet: URL:http://s-space.snu.ac.kr/bitstream/10371/27094/1/An Optical Helmet-Tracking System Using EKF-based PF.pdf [extrait le 2013-03-25]**
- **XIAOPENG CHEN ET AL: "A novel artificial landmark for monocular global visual localization of indoor robots", MECHATRONICS AND AUTOMATION (ICMA), 2010 INTERNATIONAL CONFERENCE ON, IEEE, PISCATAWAY, NJ, USA, 4 août 2010 (2010-08-04), pages 1314-1319, XP031764898, ISBN: 978-1-4244-5140-1**

**Description**

La présente invention concerne une méthode de détermination au moins partielle de la position d'un solide dans l'espace, et un dispositif d'acquisition pour obtenir cette information. L'expression 'au moins partielle' signifie que la méthode ne permet pas dans tous les cas de déterminer la valeur des six degrés de liberté du solide. Elle permet cependant dans tous les cas de déterminer une partie des degrés de liberté, notamment une direction attachée au solide et, si elle est conduite à son terme, elle permet de déterminer l'ensemble des degrés de liberté du solide.

L'objectif de l'invention est de fournir une méthode applicable au suivi en temps réel de la position d'un casque de réalité virtuelle embarqué dans une voiture.

Le fait que le casque de réalité virtuelle doive être porté dans une voiture entraîne certaines contraintes quant à la méthode de détermination de sa position :
L'acquisition de données doit pouvoir être faite dans un environnement lumineux extrêmement variable, résultant des conditions atmosphériques, et des mouvements du véhicule qui font fortement varier la lumière reçue dans l'habitacle du véhicule.

L'acquisition de données doit pouvoir être faite dans un environnement comportant de nombreuses pièces métalliques.

La méthode de détermination utilisée doit présenter une robustesse importante et assurer l'obtention du résultat de manière fiable, sans dérive dans le temps.

La méthode de détermination doit être 'temps réel', c'est-à-dire qu'elle doit permettre de suivre la position (en 6 degrés de liberté ou '6D') du solide au fil du temps, avec une fréquence d'acquisition élevée, par exemple au moins égale à 100 Hz.

Enfin, le matériel nécessaire pour la mise en oeuvre de la méthode doit rester relativement peu onéreux.

Différentes méthodes connues de détermination de la position d'un solide dans l'espace, ou méthodes de 'tracking 6D' satisfont à certaines des exigences énoncées précédemment. Ces méthodes font appel notamment aux technologies suivantes :

- Inertielle : les systèmes inertiels permettent une localisation 6D à l'estime précise et rapide, mais présentent une dérive dans le temps importante ;
- Magnétique : les systèmes magnétique permettent une localisation 6D précise.
  La phase d'initialisation est rapide et la dérive dans le temps quasi nulle. Ces systèmes cependant nécessitent un éloignement de toutes pièces métalliques qui pourraient venir perturber le champ magnétique.
- Optique : la plupart des méthodes optiques connues utilisent une ou plusieurs caméras dans un environnement contraint, dont l'éclairage est contrôlé. Les caméras par exemple servent à détecter une mire passive positionnée sur un casque. Afin de couvrir les mouvements possibles, l'espacement entre les caméras et avec le casque doit être important (de l'ordre de deux mètres). Une telle solution est inexploitable dans un habitacle d'automobile du fait qu'elle ne permet absolument pas de fournir des résultats corrects dans l'environnement lumineux très changeant d'un véhicule automobile.
  Il existe par ailleurs des méthodes techniquement performantes, susceptibles de permettre le suivi de position d'un casque de réalité virtuelle dans un véhicule, mais nécessitant la mise en oeuvre d'une source laser. Cependant les matériels nécessaires restent chers.
  A côté des méthodes multi-caméras, une méthode utilisant une seule caméra est divulguée par le document « A faster relative 3D position and attitude algorithm based on spécial four-point feature », de MM.Pan Shuliang, Wanq Xiaojian, Shen Weiqun, et Song Zishan (Proceedings of SPIE, 2006, vol.63571A, A-1 à A-7). Cette méthode nécessite cependant des calculs relativement compliqués et requiert en outre que les quatre points utilisés pour déterminer la position du solide soient disposés en carré.

Par suite, aucune des méthodes existantes ne satisfait à l'ensemble des contraintes énoncées précédemment, et ne permet donc la détermination de la position d'un casque de réalité virtuelle à l'intérieur de l'habitacle d'un véhicule automobile à l'aide de matériels simples et ayant un prix modéré.

Un premier objectif de la présente invention est donc de proposer une méthode de détermination au moins partielle de la position d'un solide dans l'espace, qui ne présente pas les inconvénients des méthodes précédentes, et qui satisfasse aux différentes exigences rappelées antérieurement.

Cet objectif est atteint par une méthode telle que décrite dans les revendications où le terme 'point visible' désigne de manière large tout élément visible dont l'image peut être traitée pour fournir les coordonnées d'un point (unique). Un point visible peut ainsi être soit effectivement un point de très faible diamètre, ou encore un cercle, une ellipse, une croix, un disque, une sphère, etc. Un point visible peut aussi être constitué par une source lumineuse dont le rayonnement émis peut de la même manière fournir les coordonnées d'un point.

On notera donc qu'une extrémité d'un trait, ou d'une source lumineuse en forme de barreau, constitue donc également un 'point visible'.

La caméra mentionnée est naturellement celle qui a servi à acquérir l'image utilisée pour la mise en oeuvre de la méthode ; le centre optique mentionné est celui de la caméra.

Avantageusement, cette méthode ne se fonde que sur l'analyse d'une seule image : Elle peut ainsi être mise en oeuvre à partir d'images produites par une unique caméra, ce qui est un moyen d'acquisition particulièrement courant et économique.

Un autre intérêt de cette méthode est qu'elle permet, à l'aide d'une quantité de calcul particulièrement réduite, de déterminer un premier élément important quant à la position 6D du solide, à savoir les coordonnées d'un vecteur colinéaire aux deux vecteurs parallèles définis par les paires de points caractéristiques du solide.

Dans un mode de mise en oeuvre, les coordonnées de l'un quelconque desdits vecteurs normaux peuvent être déterminées à l'étape b) en calculant le produit vectoriel de deux vecteurs reliant le centre optique à respectivement deux desdits points contenus dans l'un desdits deux plans.

Dans un mode de mise en oeuvre, l'étape a) comprend les sous-étapes suivantes :

a1) on identifie des portions de l'image dans lesquelles une probabilité de présence desdits points est élevée ;
a2) on détermine la position des points en priorité dans chacune desdites portions de l'image.

Dans un mode de mise en oeuvre, dans l'étape a1), la probabilité de présence est déterminée sur la base d'au moins une position desdits points dans au moins une image antérieure du solide.

L'invention porte également sur une méthode de détermination de la position dans l'espace d'au moins un bipoint d'un solide. Suivant cette méthode, on détermine une direction du solide dans l'espace à l'aide de la méthode définie précédemment ; puis au cours d'une étape d), on détermine les coordonnées des deux premiers et/ou des deux seconds points sont calculées en résolvant une équation exprimant que le vecteur reliant lesdits deux points considérés est égal à la somme d'un vecteur reliant l'un desdits deux points considérés au centre optique de la caméra et d'un vecteur reliant le centre optique de la caméra à l'autre desdits deux points considérés et en utilisant une distance connue entre lesdits deux points considérés.

Dans un mode de mise en oeuvre, à l'étape d), on résout l'équation en effectuant un produit scalaire des vecteurs des deux branches de l'égalité avec deux vecteur(s) reliant le centre optique et les points considérés.

L'invention comprend également un programme d'ordinateur comprenant des instructions pour, lorsqu'il est exécuté sur une unité de calcul, permettre la mise en oeuvre de la méthode présentée précédemment.

Enfin, un second objectif de l'invention est de proposer un dispositif d'acquisition, permettant le suivi robuste d'un solide dans l'espace (en 6D), de manière très rapide de manière à pouvoir être mis en oeuvre en temps réel, et cela dans un environnement de luminosité très variable et comportant des parties métalliques.

Cet objectif est atteint au moyen d'un dispositif d'acquisition comprenant :

au moins une caméra pour l'acquisition d'images d'un objet à suivre dans l'espace, une mémoire comprenant un programme tel que défini précédemment, et une unité de traitement de données, apte à exécuter ledit programme, et apte à recevoir au moins une image acquise par la caméra.

On comprend naturellement que, pour remplir la fonction voulue, le dispositif doit être utilisé pour déterminer la position d'un solide spécifique, présentant quatre points agencés de telle sorte que deux premiers desdits points et deux seconds desdits points définissent respectivement un premier vecteur et un second vecteur parallèles l'un à l'autre.

L'invention s'étend enfin à un système de réalité virtuelle comprenant un casque immersif, et un dispositif d'acquisition tel que défini précédemment, le casque présentant quatre points visibles, agencés de telle sorte que deux premiers desdits points et deux seconds desdits points définissent respectivement un premier vecteur et un second vecteur parallèles l'un à l'autre, de telle sorte que le dispositif d'acquisition est apte à déterminer la position du casque dans l'espace.

Par casque immersif, on désigne un équipement porté sur la tête qui sert à afficher des contenus video devant les yeux de l'utilisateur.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- la figure 1 est une vue schématique d'un système de réalité virtuelle selon l'invention ;
- la figure 2 est une vue en perspective schématique d'un mode de mise en oeuvre de la méthode de détermination de position selon l'invention ; et
- la figure 3 est une représentation schématique d'une image utilisée lors de la détermination de position d'un solide conformément à l'invention.

**Dispositif d'acquisition et mode opératoire**

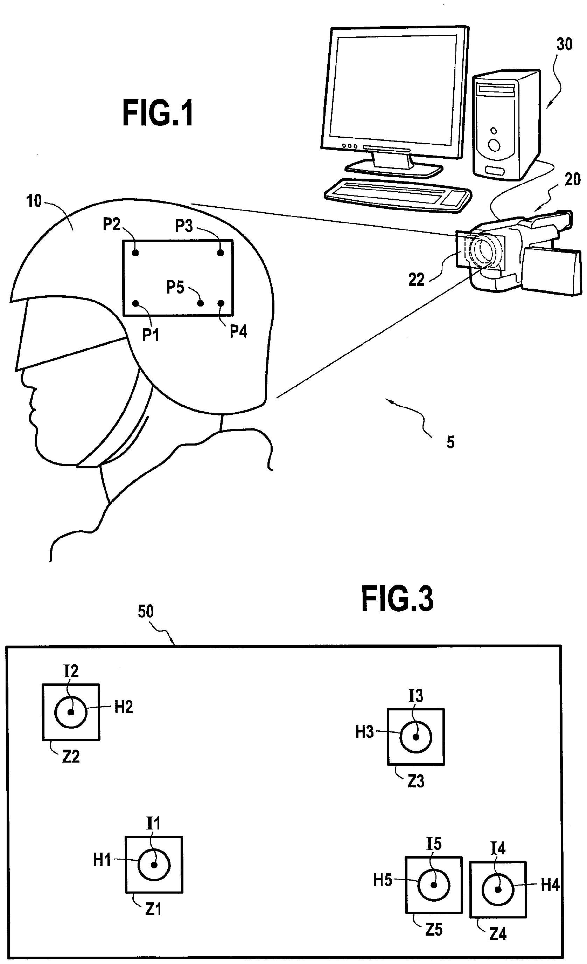

La figure 1 présente un mode de réalisation d'un dispositif de détermination de la position d'un solide suivant l'invention.

Le dispositif 5 présenté sur cette figure permet le suivi dans l'espace d'un casque immersif 10 de réalité virtuelle représenté sur la figure 1, qui constitue le 'solide' au sens de l'invention.

Le casque 10 présente cinq points ($P_i$, i=1 à 5) ou amers aisément identifiables sur une image du solide prise par une caméra.

De manière générale, ces points peuvent être de simples marques visibles sur l'objet lorsque celui-ci est éclairé (dans une plage de longueur d'ondes visible ou non). Ils peuvent aussi être matérialisés par des sources lumineuses, par exemple des diodes électroluminescents ou LED. Dans le dispositif 5, le spectre d'émission des sources lumineuses est choisi de manière à correspondre à des fréquences auxquelles la caméra présente une bonne sensibilité.

En outre, un filtrage fréquentiel peut être prévu afin d'éliminer de l'image des rayonnements parasites dont les fréquences ne correspondent pas à celles de la lumière émise par les diodes.

Dans le dispositif 5, le solide 10 a été équipé de sources lumineuses sous forme de cinq LEDs sensiblement ponctuelles émettant dans l'infrarouge, et qui sont disposées aux points $P_i$.

Le dispositif 5 se compose en outre d'une caméra 20.

La caméra 20 est une caméra sensible aux infrarouge ; son objectif a été équipé d'un filtre 22 qui élimine la lumière dans le spectre visible. Ainsi lors de l'obtention d'une image du casque 10 par la caméra, le rayonnement parasite en lumière visible est éliminé par le filtre.

Les paramètres intrinsèques de la caméra 20 sont décrits dans le tableau suivant :

| Variable | Description | Valeur |
|---|---|---|
| F | Focale | 12mm |
| $t_u$ | taille horizontale des pixels | $8\mu m$ |
| tv | taille verticale des pixels | $8\mu m$ |
| $\alpha_u$ | rapport $f/t_u$ | - |
| $\alpha_v$ | rapport $f/t_v$ | - |
| $u_0$ | Position horizontale de la projection du centre de caméra sur le plan image | 320 |
| $v_0$ | Position verticale de la projection du centre de caméra sur le plan image | 200 |

La caméra 20 est donc une caméra noir et blanc à basse résolution, c'est-à-dire comportant moins de 1 millions de pixels. Elle réalise des acquisitions d'image à haute fréquence, à savoir 200 Hz.

Sur le casque 10, la position des points Pi n'est pas quelconque. De manière générale selon l'invention, les points Pi doivent être agencés de telle sorte que deux premiers de ces points ($P_1,P_2$) et deux seconds de ces points ($P_3,P_4$) définissent respectivement un premier vecteur et un second vecteur parallèles l'un à l'autre.

Ainsi sur le casque 10, les points $P_i$ sont placés sur le solide 10 de telle sorte que les vecteurs $P_1P_2$ et $P_4P_3$ sont colinéaires, c'est-à-dire parallèles. En l'occurrence, les points $P_i$ sont disposés sur le casque 10 de manière à former un rectangle, mais ce n'est pas nécessaire pour la mise en oeuvre de l'invention.

Le dernier point P5 est prévu sur le casque 10 à titre de détrompeur, pour accélérer le traitement des données. Son rôle sera expliqué par la suite.

Le dispositif 5 comporte enfin une unité de traitement de données 30, constituée essentiellement par un ordinateur. Celui-ci reçoit les images prises par la caméra 20.

Le mode opératoire du dispositif 5 est le suivant :

Les diodes situées aux points $P_1$ à $P_4$ sont allumées.

La caméra est alors mise en marche et acquiert successivement des images (une seule image étant cependant suffisante pour déterminer la position du casque dans l'espace). Les différentes images sont successivement transmises à l'ordinateur 30 qui effectue alors différents traitements sur ces images de manière à déterminer les positions successives du casque 10 aux différents instants auxquels les images ont été acquises.

Ces traitements ou calculs vont maintenant être détaillés pour illustrer comment la méthode de détermination selon l'invention est mise en oeuvre dans le dispositif 5.

**Projection inverse**

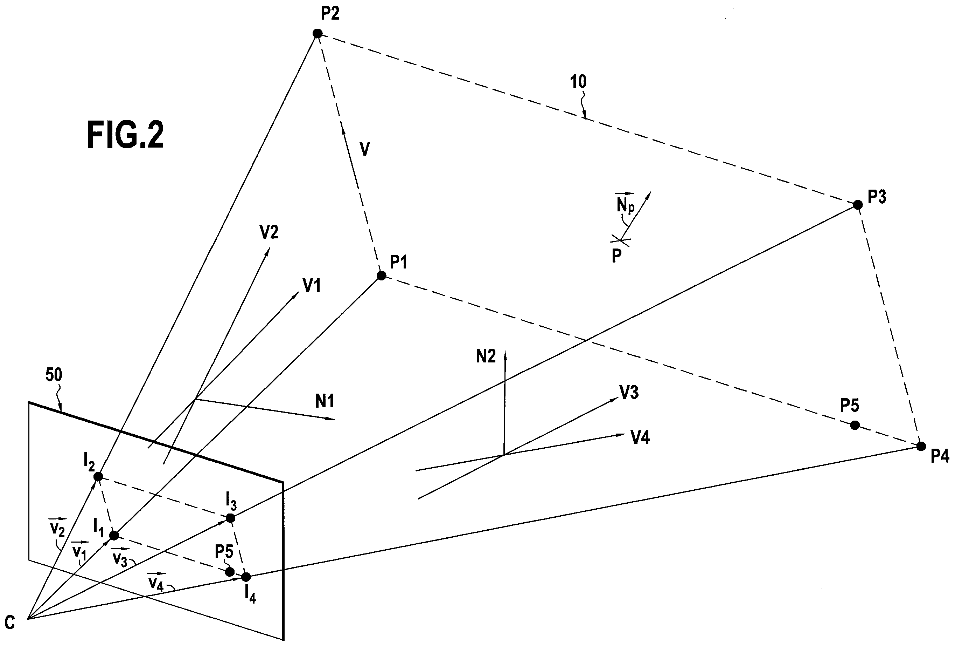

La figure 2 est une représentation schématique illustrant la méthode de détermination de la position d'un solide dans l'espace selon l'invention, mise en oeuvre dans le dispositif 5.

Une méthode selon l'invention, permettant d'identifier la position du casque 10 à partir d'une unique image, va d'abord être présentée.

Sur la figure 2, on peut identifier les points $P_1$, $P_2$, $P_3$ et $P_4$ sur le casque 10. Le reste du casque 10 n'est pas représenté.

Sur la figure 2 est représentée aussi une image 50 du casque 10, telle qu'obtenue par la caméra 20. Du fait du filtrage par le filtre 22, seule la lumière des diodes placées aux points $P_1$ à $P_4$ apparaît dans l'image 50.

Ainsi dans l'image 50, on peut reconnaître des points $I_i$ (I1, I2, I3 et I4) qui sont les points-images correspondant respectivement aux points $P_1$, $P_2$, $P_3$ et $P_4$. Chaque point $I_i$ a pour coordonnées dans l'image $u_i$ et $v_i$.

Conventionnellement, plutôt que d'être représentée en arrière du centre optique C de la caméra, l'image 20 est représentée entre celui-ci et l'objet (le casque 10) dont provient l'image.

La méthode selon l'invention comprend principalement une 'projection inverse', c'est-à-dire une opération consistant, à partir des coordonnées bidimensionnelles des points observés dans l'image, à déterminer les coordonnées tridimensionnelles de ceux-ci.

De manière habituelle, la projection inverse en utilisant une unique caméra et une seule image, n'est normalement pas possible. Grâce à l'invention, la connaissance partielle du modèle observé rend possible cette projection inverse.

Les calculs sont conduits sur la base d'un modèle sténopé de la caméra.

Dans une première étape a), on identifie dans une image 50 du casque 10, fournie par la caméra 20, la position des quatre points $I_i$ apparaissant dans l'image.

La lumière émise par chaque point Pi apparaît dans l'image 50 sous la forme d'un halo sensiblement circulaire. L'étape a) consiste donc à chercher le centre de ces différents halos, ce qui peut être fait par toute méthode connue de recherche dans une image de centres de halos sensiblement circulaires. Par exemple, le centre des halos peut être assimilé au barycentre des pixels pondérés par les niveaux de gris.

Le point $P_5$ servant de détrompeur est placé sur le casque 10 de manière à permettre l'identification d'un des points $P_1$ à $P_4$ : Dans l'exemple représenté sur les figures, le point $P_5$ est le seul point qui soit proche d'un autre point, et cet autre point est le point $P_4$.

La levée de l'indétermination sur les points Pi permet d'obtenir dès le lancement des acquisitions de position, la position effective (sans indétermination) du casque suivi.

Ensuite, dans une deuxième étape b), on détermine les coordonnées du vecteur V colinéaire aux vecteurs $P_1P_2$ et $P_4P_3$. Cette détermination se fait de la manière suivante : Les vecteurs $CI_i$ et $CP_i$ (pour i=1,2,3,4) sont dirigés dans la même direction et ont le même vecteur directeur $V_i$.

On calcule les coordonnées des vecteurs $V_i$ à partir des paramètres intrinsèques de la caméra et de la position des points $I_i$ dans l'image par la formule suivante :

$$\vec{V_i} = \begin{bmatrix} (u_i - u_0)t_u \\ (v_i - v_0)t_v \\ f \end{bmatrix}$$

On utilise alors le fait que $(\vec{v_1}, \vec{v_2})$ et $(\vec{v_3}, \vec{v_4})$ définissent deux plans dont l'intersection est une droite de vecteur directeur $\vec{v}$. Le premier plan passe par le centre optique C et les deux premiers points $P_1$ et $P_2$; le second plan passe par le centre optique C et les seconds points $P_3$ et $P_4$.

Le produit des deux normales $N_1$ et $N_2$ de ces deux plans définit le vecteur V. Celui-ci est donc calculé très simplement par le produit vectoriel des vecteurs $N_1$ et $N_2$, grâce aux formules suivantes :

$$\begin{cases} \vec{N_1} = \vec{V_1} \times \vec{V_2} \\ \vec{N_2} = \vec{V_3} \times \vec{V_4} \\ \vec{V} = \vec{N_1} \times \vec{N_2} \end{cases} \quad (1)$$

Dans une étape c) de la méthode de détermination de position, il faut maintenant déterminer la profondeur, c'est à dire la valeur des 4 coefficients $K_i = \|\vec{CP_i}\|$.

On utilise donc dans la suite du calcul des vecteurs V et Vi <u>normés</u>. Par suite, par définition les coefficients $K_i$ présentent la propriété suivante :

$$\overrightarrow{OC} + K_i \overrightarrow{V_i} = \overrightarrow{OP_i} \quad (2)$$

Pour parvenir à déterminer les valeurs des coefficients $K_i$, les distances d1 et d2 respectivement entre les points des paires de points $(P_1, P_2)$ ou $(P_3, P_4)$ doivent être connues. On peut donc écrire pour les triangles $CP_1P_2$ et $CP_3P_4$ (les vecteurs V et $V_i$ étant normés) :

$$\begin{cases} d_1 \vec{V} = K_2 \vec{V_2} - K_1 \vec{V_1} \\ d_2 \vec{V} = K_4 \vec{V_4} - K_3 \vec{V_3} \end{cases} \quad (3)$$

En effectuant le produit scalaire de la première ligne de cette dernière équation par $\vec{v_1}$ et $\vec{v_2}$, nous obtenons le premier système suivant :

$$\begin{bmatrix} K_1 \\ K_2 \end{bmatrix} = d_1 \begin{bmatrix} -1 & \vec{V_1} . \vec{V_2} \\ -\vec{V_1} . \vec{V_2} & 1 \end{bmatrix}^{-1} \begin{bmatrix} \vec{V_1} . \vec{V} \\ \vec{V_2} . \vec{V} \end{bmatrix} \quad (4)$$

Ce système d'équations permet de déterminer directement $K_1$ et $K_2$.

Les coefficients $K_3$ et $K_4$ sont calculés de la même manière à l'aide des équations suivantes :

$$\begin{bmatrix} K_3 \\ K_4 \end{bmatrix} = d_2 \begin{bmatrix} -1 & \vec{V_3} . \vec{V_4} \\ -\vec{V_3} . \vec{V_4} & 1 \end{bmatrix}^{-1} \begin{bmatrix} \vec{V_3} . \vec{V} \\ \vec{V_4} . \vec{V} \end{bmatrix} \quad (4')$$

A ce stade, la connaissance des coefficients $K_i$ et des vecteurs $V_i$ fournit la position des points Pi dans le repère de la caméra.

Il reste à déterminer la position en termes de translation et d'orientation du solide 10. Pour cela, on suppose que le centre du rectangle est le point P que nous voulons déterminer, la normale au plan défini par le rectangle, $\overrightarrow{N_{pi}}$ est l'orientation de la cible. Ainsi, la position du centre du rectangle est donnée par l'équation vectorielle, dans laquelle O représente un point quelconque :

$$OP = ¼ (OP_1 + OP_2 + OP_3 + OP_4)$$

la cible. Ainsi, la position du centre du rectangle est donnée par l'équation vectorielle, dans laquelle O représente un point quelconque :

$$OP = ¼ (OP_1 + OP_2 + OP_3 + OP_4)$$

Enfin, l'orientation du plan des points $P_i$ est donnée par l'équation suivante, fondée sur le produit vectoriel des vecteurs $P_1P_2$ et $P_1P_4$ sous-tendus par les côtés du rectangle 10 au point P1 :

$$\overrightarrow{N_p} = \overrightarrow{P_1P_2} \times \overrightarrow{P_1P_4}$$

Pour améliorer la précision du résultat, le même calcul est effectué pour chacun des trois autres sommets du rectangle 10. Le vecteur $N_P$ final est obtenu comme moyenne des quatre vecteurs $N_P$ ainsi calculés.

On dispose alors des informations cherchées caractérisant la position en 6 degrés de liberté du casque 10 : la position du centre P des quatre points $P_i$, ainsi que du vecteur normal au rectangle $P_1P_2P_3P_4$. Naturellement cette position peut être définie par d'autres grandeurs équivalentes. En particulier, à partir de ces informations on peut aisément calculer la rotation permettant de passer du repère caméra au repère lié au casque 10 et aux points $P_i$.

On notera qu'il n'est pas indispensable de lever l'indétermination entre les points $P_1$ à $P_4$ grâce à l'utilisation d'un point détrompeur $P_5$. En effet, même si l'on n'a pas prévu de détrompeur et qu'ainsi on ne dispose pas à chaque instant d'un moyen permettant distinguer entre eux les différents points Pi, on peut néanmoins mettre en oeuvre la méthode, et cela de la manière suivante : Pour éviter toute indétermination sur la position du solide, il faut au début des acquisitions disposer d'indications sur la position du solide qui soient suffisantes pour lever les indéterminations dès la première acquisition. Par exemple, il peut suffire de savoir que le point le plus haut du solide au démarrage est le point P1, et que les points P1 à P4 apparaissent dans l'image dans le sens horaire.

**Détermination temps réel**

Une méthode de détermination de position, permettant d'obtenir la position du casque 10 à partir d'une image unique a été présentée ci-dessus.

En pratique, cette méthode est intégrée au sein du dispositif 5 (et plus précisément, au sein de l'ordinateur 30) de la manière suivante pour permettre une acquisition en temps réel :

L'ordinateur 30 exécute un algorithme de calcul consistant principalement à exécuter itérativement des déterminations de la position du casque 10 à partir d'images acquises successivement par la caméra 20, chaque détermination de position étant réalisée suivant la méthode exposée précédemment.

Cet algorithme est optimisé :

Au démarrage, lors de la première détermination de position, la recherche des points Pi se fait dans l'image entière.

Cependant par la suite, une fois que la position du casque est déterminée et mise à jour à chaque itération de l'algorithme, la recherche des positions des points $I_i$ dans les images successives (étape a) de la méthode) est faite plus rapidement, de la manière suivante :

A l'étape a) on commence par identifier des portions de l'image dans lesquelles une probabilité de présence des points $I_i$ est élevée (étape a1) ; on détermine alors la position des points $I_i$ en priorité dans chacune de ces portions de l'image (étape a2).

Ces opérations sont faites concrètement de la manière suivante :

On se place dans le cas où lors de la précédente itération de l'algorithme, l'ensemble des points $I_1$ à $I_4$ ont été identifiés dans l'image. Il y a alors une forte probabilité que dans l'image nouvellement acquise par la caméra 20, les points $I_i$ soient situés dans une position voisine de leur position antérieure.

L'étape a) de détermination de la position des points $I_i$ dans l'image est alors réalisée en deux temps :

Dans un premier temps, pour chaque point $I_i$, l'ordinateur 30 définit une zone de recherche $Z_i$ (i=1 à 5) à partir de la position du points $I_i$ dans l'image précédente. Cette zone de recherche peut par exemple être un carré de dimensions prédéterminées (en pixels), centré sur la position antérieure du point $I_i$ dans l'image précédente (Figure 3). Eventuellement, la position et la forme de la zone de recherche peuvent être affinées en prenant en compte pour un point $I_i$ non seulement sa position dans l'image précédente, mais ses positions dans une pluralité d'images précédentes.

Ce mode de mise en oeuvre est illustré par la figure 3. On y a représenté, pour chacun des points $I_i$ (i=1 à 5) :

- sa position (ponctuelle) exacte représentée par un point référencé $I_i$ ;
- le halo $H_i$ correspondant, qui est en fait l'image du point $P_i$ dans l'image 50 ; chaque halo $H_i$ s'étend sur plusieurs pixels dans les deux directions ; et enfin,
- la zone de recherche du point $I_i$ dans l'image suivante : Cette zone de recherche est un carré centré sur le point $I_i$, de dimensions prédéterminées.

Dans un second temps, la recherche des points Ii est réalisée. Avantageusement, cette recherche n'est réalisée, au moins dans un premier temps, que dans les zones de recherche $Z_i$ déterminées auparavant.

Le temps de calcul pour la détermination de position des points $I_i$ dans l'image (étape a) est ainsi fortement réduit.

En plus des étapes de calcul présentées précédemment, la méthode peut comporter en outre éventuellement, si nécessaire, l'acquisition de données fournies par une centrale inertielle ou tout autre moyen d'acquisition, et la prise en compte de ces informations, que ce soit pour améliorer la fiabilité ou la précision lors de la détermination de la position du solide, ou pour fournir des positions intermédiaires du solide entre deux déterminations de la position du solide à partir d'une image de la caméra.

Le dispositif et la méthode proposés ont été testés pour le suivi effectif d'un solide dans l'espace. Ils ont fait preuve de leur efficacité en permettant la détermination de la position du solide étudié à une fréquence de 200 Hz, et cela de manière très robuste.

**Revendications**

1. Méthode de détermination d'une direction attachée à un solide, le solide présentant quatre points visibles ($P_1$-$P_4$), agencés de telle sorte que deux premiers ($P_1$,$P_2$) desdits points et deux seconds ($P_3$,$P_4$) desdits points définissent respectivement un premier vecteur ($P_1P_2$) et un second vecteur ($P_3P_4$) parallèles l'un à l'autre et dirigés suivant la direction à déterminer, la méthode comprenant l'étape suivante :

   a) à l'aide d'un ordinateur, on identifie dans une image (50) dudit solide les positions ($I_i$) desdits quatre points ;

   la méthode **se caractérisant en ce qu'**elle comprend en outre les étapes suivantes :

   b) à l'aide des paramètres intrinsèques de la caméra et à partir desdites positions, à l'aide d'un ordinateur, on détermine les coordonnées de vecteurs normaux ($N_1$, $N_2$) à deux plans :

   - le premier plan passant par le centre optique (C) et lesdits deux premiers points ($P_1$,$P_2$), et
   - le second plan passant par le centre optique (C) et lesdits deux seconds points ($P_3$,$P_4$) ; et

   c) à l'aide d'un ordinateur, on détermine les coordonnées d'un vecteur (V) colinéaire auxdits vecteurs parallèles en calculant le produit vectoriel desdits vecteurs normaux ($N_1$, $N_2$).

2. Méthode selon la revendication 1, dans lequel à l'étape b), on détermine les coordonnées desdits vecteurs normaux ($N_1$, $N_2$) en calculant le produit vectoriel de deux vecteurs ($V_i$) reliant le centre optique (C) à respectivement deux desdits points contenus dans l'un desdits deux plans.

3. Méthode selon la revendication 1 ou 2, dans laquelle l'étape a) comprend les sous-étapes suivantes :

   a1) on identifie des portions de l'image ($Z_i$) dans lesquelles une probabilité de présence desdits points est élevée ;
   a2) on détermine la position des points en priorité dans chacune desdites portions de l'image.

4. Méthode selon la revendication 3, dans laquelle dans l'étape a1), ladite probabilité de présence est déterminée sur la base d'au moins une position desdits points dans au moins une image antérieure du solide.

5. Méthode de détermination de la position dans l'espace d'au moins un bipoint ($P_1$,$P_2$ ; $P_3$,$P_4$) d'un solide ; suivant laquelle on détermine une direction attachée au solide à l'aide de la méthode définie par l'une quelconque des revendications 1 à 4 ; puis au cours d'une étape d), on détermine les coordonnées des deux premiers et/ou des deux seconds points en résolvant une équation (3) exprimant que le vecteur ($P_1P_2$ ; $P_3P_4$) reliant lesdits deux points considérés est égal à la somme d'un vecteur ($P_1C$) reliant l'un ($P_1$) desdits deux points considérés au centre optique de la caméra et d'un vecteur ($CP_2$) reliant le centre optique de la caméra à l'autre ($P_2$) desdits deux points considérés et en utilisant une distance connue ($d_1$, $d_2$) entre lesdits deux points considérés.

6. Méthode selon la revendication 5, et dans laquelle à l'étape d), on résout l'équation (3) en effectuant un produit scalaire des vecteurs des deux branches de l'égalité avec deux vecteurs ($V_1$,$V_2$ ; $V_3$,$V_4$) reliant le centre optique (C) et les points considérés ($P_1$,$P_2$ ; $P_3$,$P_4$).

7. Programme d'ordinateur comprenant des instructions pour, lorsqu'il est exécuté sur une unité de calcul (30), permettre la mise en oeuvre de la méthode suivant l'une quelconque des revendications 1 à 6.

8. Dispositif d'acquisition, comprenant au moins une caméra (20) pour l'acquisition d'images (50) d'un objet à suivre dans l'espace, une mémoire comprenant un programme selon la revendication 7, et une unité (30) de traitement de données, apte à exécuter ledit programme, et apte à recevoir au moins une image acquise par la caméra.

9. Système de réalité virtuelle comprenant un casque immersif (10), et un dispositif d'acquisition (5) suivant la revendication 8, le casque présentant quatre points visibles ($P_1$-$P_4$), agencés de telle sorte que deux premiers ($P_1$,$P_2$) desdits points et deux seconds ($P_3$,$P_4$) desdits points définissent respectivement un premier vecteur ($P_1P_2$) et un second vecteur ($P_3P_4$) parallèles l'un à l'autre, de telle sorte que le dispositif d'acquisition (5) est apte à déterminer la position du casque dans l'espace.

**Patentansprüche**

1.  Verfahren zum Bestimmen einer Richtung, die mit einem Festkörper verbunden wird, wobei der Festkörper vier sichtbare Punkte ($P_1$-$P_4$) aufweist, die derart angeordnet werden, dass zwei erste ($P_1$, $P_2$) der Punkte und zwei zweite ($P_3$, $P_4$) der Punkte jeweils einen ersten Vektor ($P_1P_2$) und einen zweiten Vektor ($P_3P_4$) definieren, die parallel zueinander und in der zu bestimmenden Richtung ausgerichtet sind, wobei das Verfahren den folgenden Schritt aufweist:

    a) Identifizieren der Positionen ($I_i$) der vier Punkte in einem Bild (50) des Festkörpers unter Verwendung eines Computers,

    wobei das Verfahren **dadurch gekennzeichnet ist, dass** es ferner die folgenden Schritte aufweist:

    b) unter Verwendung der intrinsischen Parameter der Kamera und ausgehend von den Positionen unter Verwendung eines Computers Bestimmen der Koordinaten von Normalenvektoren ($N_1$, $N_2$) auf zwei Ebenen:

    - wobei die erste Ebene durch das optische Zentrum (C) und die ersten zwei Punkte ($P_1$, $P_2$) verläuft und
    - wobei die zweite Ebene durch das optische Zentrum (C) und die zweiten zwei Punkte ($P_3$, $P_4$) verläuft und

    c) unter Verwendung eines Computers Bestimmen der Koordinaten eines Vektors (V), der zu den Parallelvektoren kollinear verläuft, indem das Vektorprodukt der Normalvektoren ($N_1$, $N_2$) berechnet wird.

2.  Verfahren nach Anspruch 1, wobei bei dem Schritt b) die Koordinaten der Normalvektoren ($N_1$, $N_2$) bestimmt werden, indem das Vektorprodukt von zwei Vektoren ($V_i$) bestimmt wird, die das optische Zentrum (C) jeweils mit zwei der Punkte verbinden, die in einer der zwei Ebenen enthalten sind.

3.  Verfahren nach Anspruch 1 oder 2, **dadurch gekennzeichnet, dass** der Schritt a) die folgenden Unterschritte aufweist:

    a1) Identifizieren der Teile des Bildes ($Z_i$), in denen eine Wahrscheinlichkeit des Vorhandenseins der Punkte hoch ist,
    a2) Bestimmen der Position der Prioritätspunkte in jedem der Teile des Bildes.

4.  Verfahren nach Anspruch 3, wobei bei dem Schritt a1) die Wahrscheinlichkeit des Vorhandenseins auf der Grundlage von mindestens einer Position der Punkte in mindestens einem früheren Bild des Festkörpers bestimmt wird.

5.  Verfahren zum Bestimmen der Position mindestens eines Zweifachpunkts ($P_1$, $P_2$; $P_3$, $P_4$) eines Festkörpers im Raum, wobei eine Richtung, die mit einem Festkörper verbunden wird, durch das Verfahren nach einem der Ansprüche 1 bis 4 bestimmt wird und dann während eines Schritts d) die Koordinaten der zwei ersten und/oder zwei zweiten Punkte durch Lösen einer Gleichung (3), die ausdrückt, dass der Vektor ($P_1P_2$; $P_3P_4$), der die zwei betrachteten Punkte verbindet, gleich der Summe eines Vektors ($P_1C$), der einen ($P_1$) der zwei betrachteten Punkte mit dem optischen Zentrum der Kamera verbindet, und eines Vektors ($CP_2$) ist, der das optische Zentrum der Kamera mit dem anderen ($P_2$) der zwei betrachteten Punkte verbindet, und unter Verwendung eines bekannten Abstands ($d_1$, $d_2$) zwischen den zwei betrachteten Punkten bestimmt werden.

6.  Verfahren nach Anspruch 5 und wobei bei dem Schritt d) die Gleichung (3) gelöst wird, indem ein Skalarprodukt der Vektoren der zwei Zweige der Gleichheit mit zwei Vektoren ($V_1$, $V_2$; $V_3$, $V_4$) ausgeführt wird, indem das optische Zentrum (C) und der betrachteten Punkte ($P_1$, $P_2$; $P_3$, $P_4$) verbunden werden.

7.  Computerprogramm, das Anweisungen aufweist, um, wenn es auf einer Recheneinheit (30) ausgeführt wird, das Umsetzen eines Verfahrens nach einem der Ansprüche 1 bis 6 zu ermöglichen.

8.  Aufnahmevorrichtung, umfassend mindestens eine Kamera (20) zur Aufnahme von Bildern (50) eines Gegenstands, der im Raum zu verfolgen ist, einen Speicher, der ein Programm nach Anspruch 7 aufweist, und eine Datenverarbeitungseinheit (30), die geeignet ist, das Programm auszuführen und geeignet ist, mindestens eine Bild, das von der Kamera aufgenommen wird, zu empfangen.

9.  System für virtuelle Realität, umfassend einen Immersionshelm (10) und eine Aufnahmevorrichtung (5) nach Anspruch 8, wobei der Helm vier sichtbare Punkte ($P_1$-$P_4$) aufweist, die derart angeordnet sind, dass zwei erste ($P_1$, $P_2$) der Punkte und zwei zweite ($P_3$, $P_4$) der Punkte jeweils einen ersten Vektor ($P_1P_2$) und einen zweiten Vektor ($P_3P_4$) definieren, die parallel zueinander sind, derart, dass die Aufnahmevorrichtung (5) geeignet ist, die Position des Helms im Raum zu bestimmen.

**Claims**

1. A method for determining a direction attached to a solid, the solid having four visible points ($P_1$-$P_4$), arranged such that two first ($P_1$, $P_2$) of said points and two second ($P_3$, $P_4$) of said points define respectively a first vector ($P_1P_2$) and a second vector ($P_3P_4$) parallel to each other and oriented in the direction to be determined, the method comprising the following step:

   a) using a computer, identifying in one image (50) of said solid the positions ($I_i$) of said four points;

   the method being **characterized in that** it further comprises the following steps:

   b) using the intrinsic, parameters of the camera and from said positions, using a computer, determining the coordinates of normal vectors ($N_1$, $N_2$) which are normal to two planes:

   - the first plane passing through the optical center (C) and said two first points ($P_1$, $P_2$), and
   - the second plane passing through the optical center (C) and the said two second points ($P_3$, $P_4$); and

   c) using a computer, determining the coordinates of a vector (V) collinear to said parallel vectors by calculating the vector product of said normal vectors ($N_1$, $N_2$).

2. The method according to claim 1, wherein in step b), the coordinates of said normal vectors ($N_1$, $N_2$) are determined by calculating the vector product of two vectors ($V_i$) connecting the optical center (C) to respectively two of said points contained in one of said two planes.

3. The method according to claim 1 or 2, wherein step a) comprises the following sub-steps:

   a1) identifying portions of the image ($Z_i$) in which a probability of presence of said points is high;
   a2) determining the position of the points primarily in each of said portions of the image.

4. The method according to claim 3 wherein in step a1) said presence probability is determined based on at least one position of said points in at least one anterior image of the solid.

5. A method for determining the position in space of at least one bi-point ($P_1$, $P_2$; $P_3$, $P_4$) of a solid; according to which a direction attached to the solid is determined using the method defined by any one of claims 1 to 4; then during a step d), the coordinates of the two first and/or two second points are determined by solving an equation (3) expressing that the vector ($P_1P_2$ ; $P_3P_4$) connecting said two considered points is equal to the sum of a vector ($P_1C$) connecting one ($P_1$) of said two considered points in the optical center of the camera and of a vector ($CP_2$) connecting the optical center of the camera to the other ($P_2$) of said two considered points and using a known distance ($d_1$, $d_2$) between said two considered points.

6. The method according to claim 5, and wherein in step d), the equation (3) is solved by performing a scalar product of the vectors of the two branches of the equality with two vectors ($V_1$, $V_2$ ; $V_3$, $V_4$) connecting the optical center (C) and the considered points ($P_1$, $P_2$; $P_3$, $P_4$).

7. A computer program comprising instructions for allowing, when it is run on a calculation unit (30), the implementation of the method according to any one of claims 1 to 6.

8. An acquisition device, comprising at least one camera (20) for acquiring images (50) of an object to be tracked in space, a memory comprising a program according to claim 7, and a data processing unit (30), able to run said program, and able to receive at least one image acquired by the camera.

9. A virtual reality system comprising an immersive helmet (10), and an acquisition device (5) according to claim 8,

EP 2 877 979 B1

the helmet having four visible points ($P_1$-$P_4$), arranged such that two first ($P_1$, $P_2$) of said points and two second ($P_3$, $P_4$) of said points define respectively a first vector ($P_1P_2$) and a second vector ($P_3P_4$) parallel to each other, such that the acquisition device (5) is able to determine the position of the helmet in space.

**FIG.1**

**FIG.3**

FIG.2

EP 2 877 979 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MM.PAN SHULIANG ; WANQ XIAOJIAN ; SHEN WEIQUN ; SONG ZISHAN.** A faster relative 3D position and attitude algorithm based on spécial four-point feature. *Proceedings of SPIE,* 2006, vol. 63571A, A-1, , A-7